# EUROPÄISCHE PATENTSCHRIFT

(11) **EP 2 909 015 B1**
(45) Veröffentlichungstag und Bekanntmachung des Hinweises auf die Patenterteilung: **01.12.2021**
(21) Anmeldenummer: 13782961.0
(22) Anmeldetag: 07.10.2013
(51) Int. Cl.: B29C 70/52, B29D 99/00

(54) **SYSTEM UND VERFAHREN ZUM HERSTELLEN EINES ROTORBLATTGURTES**
SYSTEM AND METHOD FOR PRODUCING A ROTOR BLADE BELT
SYSTÈME ET PROCÉDÉ DE FABRICATION D'UNE SEMELLE DE LONGERON DE PALE DE ROTOR

(30) Priorität: 22.10.2012 DE 102012219224
(43) Veröffentlichungstag der Anmeldung: 26.08.2015
(73) Patentinhaber: Siemens Gamesa Renewable Energy Service GmbH, 22297 Hamburg (DE)
(72) Erfinder: EYB, Enno, 24116 Kiel (DE); BENDEL, Urs, 24787 Fockbek (DE); ZELLER, Lenz Simon, 24242 Felde (DE)
(74) Vertreter: Wallinger Ricker Schlotter Tostmann
(86) Internationale Anmeldenummer: PCT/EP2013/003007
(87) Internationale Veröffentlichungsnummer: WO 2014/063783

(56) Entgegenhaltungen:
- WO-A1-2010/065928
- GB-A- 2 497 578
- US-A1- 2008 159 871
- US-A1- 2018 297 308

## Beschreibung

Die Erfindung betrifft ein System und ein Verfahren zum Herstellen eines Rotorblattgurtes mit pultrudierten Stäben aus einem faserverstärkten Material.

Rotorblattgurte bestehen im Allgemeinen aus starken Strängen parallel ausgerichteter Fasern, meist Glasfasern oder Kohlefasern, die in eine Harzmatrix eingebettet sind. Die Rotorblattgurte durchziehen die Rotorblätter üblicherweise über einen Großteil der Rotorblattlänge von der Rotorblattspitze bis zur Rotorblattwurzel und dienen dazu, die Kräfte, die auf das Rotorblatt einwirken, an die Rotorblattwurzel zu übertragen.

Rotorblattgurte werden üblicherweise in einer geschichteten Bauweise hergestellt, in der entweder trockene Fasergelege parallel ausgerichtet aufeinandergelegt werden und anschließend in einem Harzinfusionsverfahren zum Rotorblattgurt gefertigt werden, oder es werden vorgefertigte Lagen von bereits in Harz eingebetteten Fasermaterialien, so genannte Prepregs, aufeinandergelegt und anschließend miteinander verbunden. Da Rotorblattgurte ähnlich lang sind wie moderne Rotorblätter, also über 40 m oder 50 m lang sein können, sind die verwendeten Fasermaterialien entsprechend lang und großvolumig.

Das Aushärten des Harzes ist ein exothermer Prozess, es entsteht dabei also Wärme. Die über große Volumina verteilte Wärme kann zu einer Wellenbildung im Fasermaterial führen, so dass dieses anschließend nicht mehr über die gesamte Gurtlänge ideal parallel ausgerichtet ist. Dies beeinträchtigt dann die Zugfestigkeit und somit die strukturelle Kompaktheit sowie die Funktionsfähigkeit des so hergestellten Rotorblattgurtes.

Aus US 2011/0243750 A1 ist es bekannt, anstelle von trockenen Glasfasergelegen oder Prepregs pultrudierte Stäbe aus faserverstärkten Materialien zu verwenden. Solche pultrudierten Stäbe bestehen aus einem in einem Strangziehverfahren hergestellten faserverstärkten Material, in dem die Glasfasern oder Kohlefasern parallel ausgerichtet und in einer Harzmatrix bereits eingebettet sind. Durch das Strangziehverfahren sind sie auch ideal parallel zueinander ausgerichtet. Die pultrudierten Stäbe werden dicht aneinandergelegt, so dass sich aus den Stäben der Aufbau des Rotorblattgurtes ergibt. Ein anschließendes Verfügen der Stäbe miteinander führt nicht mehr zu Wellenbildungen.

Aus US 2012/0027609 A1 ist weiterhin ein Herstellungsverfahren für Rotorblattgurte aus pultrudierten Stäben bekannt, wobei ein quasiendloser pultrudierter Stab auf einer Rolle aufgerollt ist und abgerollt wird. Bei diesem Verfahren wird jede Schicht aus nacheinander von der Rolle abgerollten und von dem quasi-endlosen Stab abgeschnittenen Stäben aufgebaut, bevor die nächste Schicht wiederum in gleicher Weise aufgebaut wird. Nach Komplettierung wird die Kontur des jeweiligen Endes jeder Schicht nachbearbeitet.

Die US 2008/0159871 A1 betrifft ein Verfahren zur Herstellung eines Windturbinenschaufelschalenelements, das mehrere Elemente aus gehärtetem faserverstärktem Bahnmaterial umfasst, wobei eine Vielzahl von Elementen aus gehärtetem faserverstärktem Bahnmaterial in einer Form bereitgestellt wird, ein Harz zwischen die Elemente aus gehärtetem faserverstärktem Bahnmaterial eingeführt wird und die Elemente durch Aushärten des Harzes mit benachbarten Elementen verbunden werden.

Die WO 2010/065928 A1 betrifft eine Windturbinenschaufel mit einem inneren Bereich, der eine innere tragende Fachwerkstruktur aufweist, wobei die Fachwerkstruktur eine triangulare Anordnung von Holmen umfassen kann, wobei Holme aus mehreren pultrudierten Verbundelementen hergestellt werden können, die in sich in Längsrichtung erstreckenden Abschnitten zusammenlaminiert sind.

Ausgehend von diesem Stand der Technik liegt der vorliegenden Erfindung die Aufgabe zugrunde, ein System und ein Verfahren zum Herstellen eines Rotorblattgurtes mit pultrudierten Stäben aus einem faserverstärkten Material anzugeben, mit denen der Aufbau eines Rotorblattgurtes mit pultrudierten Stäben schnell, prozesssicher und flexibel möglich wird.

Diese Aufgabe wird durch ein System mit den Merkmalen des Anspruchs 1 gelöst.

Im Unterschied zum bekannten Stand der Technik wird der Gurt somit mit dem erfindungsgemäßen System lagenweise aufgebaut, wobei jede Lage in einem Arbeitsschritt in oder auf eine Laminierform ein- bzw. aufgebracht wird. Die pultrudierten Stäbe sind bereits als Lage auf den Stablagenrollen aufgerollt und werden als Lage entnommen. Dadurch ist es nicht mehr notwendig, jeden einzelnen

Stab in einem eigenen Schritt abzurollen und auf- bzw. in die Form einzubringen. Dieses Verfahren erfordert nur einen Bruchteil der Zeit pro Stablage gegenüber dem zuvor bekannten Verfahren, bei dem jeder einzelne Stab abgerollt wurde.

Dies wird durch den Einsatz der Führungsvorrichtung ermöglicht, die zur Führung der gesamten Stablage ausgebildet ist. Die Führungsvorrichtung sorgt dafür, dass die Lage der pultrudierten Stäbe beisammen bleibt und sich nicht in einzelne Stäbe auflöst, so dass diese Lage als Ganze und einheitlich in bzw. auf die Laminierform ein- bzw. aufgebracht wird. Die Besäumvorrichtung erledigt die Ablängung, Besäumung und Bemaßung der Lage von pultrudierten Stäben bereits beim Abwickeln. Auf diese Weise kann die gewünschte Endkontur für die jeweilige Lage bereits beim Ablängen erzeugt werden und muss nicht aufwändig im Endzustand nachbearbeitet werden. Eine Nachbearbeitung kann natürlich auch erfindungsgemäß noch vorgesehen sein.

Diese Führungsvorrichtung stellt sicher, dass das Material an der richtigen Position relativ zur Formoberfläche eingebracht wird. Dies bezieht sich vor allem auf die Position in Bezug auf die Breite der Laminierform, um beispielsweise einen definierten Versatz der einzelnen Lagen zueinander sicherzustellen oder die Lagen genau übereinander "auf Kante" legen zu können. Andererseits bezieht sich dies auf die Höhe über der Laminierform, da es vorteilhaft ist, die Führungseinheit immer bündig zur Oberfläche der obersten Lage zu halten, da beispielsweise bei einem Hauptgurt viele Lagen übereinander gelegt werden müssen und so die Höhe der Führungseinheit justiert werden muss.

Die Lage von pultrudierten Stäben kann im Rahmen der Erfindung als solche direkt auf der Stablagenrolle aufgerollt sein, alternativ auch einseitig oder beidseitig von einer Deckschicht aus einem flexiblen Material, beispielsweise einem Fasergeflecht, einem Filzmaterial oder einem Vliesmaterial, bedeckt sein. Eine solche Deckschicht unterstützt den Zusammenhalt der Stablage. Sie kann die Stäbe der Stablage beim Abrollen und beim Durchführen durch die Führungsvorrichtung auch vor mechanischen Beschädigungen schützen. Eine solche Deckschicht sollte für flüssiges Harzmaterial durchlässig sein, um Bestandteil des Gurtaufbaus werden zu können.

Vorzugsweise weist die Haltevorrichtung eine Antriebsvorrichtung und/oder eine Bremsvorrichtung für eine in der Haltevorrichtung gehaltene Stablagenrolle und/oder wenigstens eine kraftbeaufschlagte Andruckrolle auf, die auf die aufgerollte Stablage drückt, wobei insbesondere die wenigstens eine Andruckrolle eine weiche Oberfläche aufweist. Diese Maßnahme verbessert das Abrollen der Lage von pultrudierten Stäben von der Stablagenrolle, da die pultrudierten Stäbe recht steif sind und eine Tendenz haben, sich auf der Stablagenrolle zu lockern. Die aufgerollten Stäbe wirken wie eine aufgerollte Feder, deren Federkraft nach außen drückt. Hiergegen wirken die Andruckrolle oder die Andruckrollen. Eine Andruckrolle ist vorzugsweise dort angeordnet, wo die Lage der pultrudierten Stäbe tangential von der Stablagenrolle beim Abwickeln sich entfernt. Um die Stäbe der Lage nicht zu verletzen, weist die Andruckrolle bzw. weisen die Andruckrollen vorzugsweise eine weiche Oberfläche auf.

Wegen der hohen Eigensteifigkeit des Materials kann das Stabmaterial auf den Stablagenrollen zum Transport auch mit Bändern fixiert sein. Diese verhindern, dass sich einzelne pultrudierte Stäbe aufrollen und von der Rolle lösen, was einen erheblichen Mehraufwand bei der Fertigung verursachen würde, da die Stäbe repositioniert werden müssten oder die ganze Rolle als Ausschuss verworfen werden müsste. Diese Bänder werden, wenn die Rolle in die Haltevorrichtung beispielsweise eingehängt ist, durch die Andruckrolle ersetzt.

Vorzugsweise ist wenigstens ein Sensor in der Führungsvorrichtung und/oder an einer Andruckrolle und/oder an einer eine Andruckrolle mit Kraft beaufschlagenden Einrichtung angeordnet, wobei ein Signalübertragungskanal vom wenigstens einen Sensor zu einer Steuer- oder Regelvorrichtung der Antriebs- und/oder Bremsvorrichtung vorhanden ist und die Steuer- oder Regelvorrichtung ausgebildet ist, die Bewegung einer Stablagenrolle abhängig von übertragenen Sensorsignalen zu steuern oder zu regeln. Die Sensorsignale dienen dazu, die automatische Steuerung des Abwickelns und insbesondere auch des Besäumens sowie des Ein- bzw. Aufbringens in bzw. auf die Laminierform zu steuern. Damit kann auf weitgehend automatische Weise eine gewünschte Gurtform hergestellt werden. Vorzugsweise wird die Bewegung der Stablagenrolle so geregelt oder gesteuert, dass das Ausrollen des Materials zwischen der Rolle und der Führungsvorrichtung kraftfrei erfolgt.

Ebenfalls vorzugsweise ist eine Steuervorrichtung für die Führungsvorrichtung umfasst, die ausgebildet ist, die Position der Führungsvorrichtung bezüglich ihrer vertikalen und/oder horizontalen Position in Bezug auf die Laminierform nachzuführen, insbesondere in Abhängigkeit von der Position der Oberfläche der obersten Lage von pultrudierten Stäben in der Laminierform. Mit dieser Maßnahme kann auch das Positionieren der Stäbe jeder Lage in bzw. auf der Laminierform weitgehend automatisch erfolgen.

Für die automatische Ablage der Lagen von Stäben zur Herstellung des Rotorblattgurtes ist es ferner vorteilhaft, wenn die Führungsvorrichtung Führungsrollen aufweist, zwischen denen die Lage von pultrudierten Stäben hindurch läuft, wobei insbesondere wenigstens ein berührungsloser Sensor und/oder wenigstens ein Laufradsensor zur Messung einer ausgebrachten Länge einer Lage von pultrudierten Stäben umfasst ist. An den Führungsrollen lässt sich besonders genau die Länge der bislang abgewickelten Stäbe feststellen, was wiederum als Information für den Aufbau des Rotorblattgurtes verwendet wird.

Vorzugsweise weist wenigstens eine Führungsrolle einen Antrieb und/oder eine Bremse auf. Damit ist die Führungsrolle der Führungsvorrichtung ebenfalls ausgebildet, die Lage von pultrudierten Stäben möglichst schonend und kraftfrei, insbesondere im Zusammenspiel mit der Antriebsvorrichtung in der Haltevorrichtung, abzuwickeln und somit ohne Verformungen in die Laminierform einzubringen. So kann das Material schnell und ruckfrei in die Laminierform ausgebracht werden. Dies ist besonders für große Rotorblätter wichtig, die eine Länge von beispielsweise mehr als 50 m oder insbesondere mehr als 65 m aufweisen, da hier ein Ausbringen des Materials nur durch Muskelkraft extrem zeitintensiv und arbeitsaufwendig und damit teuer ist.

Zum Einfädeln der Lage von pultrudierten Stäben in die Führungsvorrichtung ist im Rahmen der Erfindung vorzugsweise vorgesehen, dass die Lage am Ende zwischen zwei Stangen geklemmt wird, von denen wenigstens eine an ihren jeweiligen Enden Griffe aufweist. Die Stangen halten die Lage der Stäbe zusammen und erlauben das Einfädeln in die Führungsvorrichtung, gegebenenfalls unterstützt durch den Antrieb der Haltevorrichtung.

Diese erfindungsgemäße Besäumeinheit zeichnet sich dadurch aus, dass sie eine Säge- oder Fräseinheit aufweist, mit der das Material derart durchtrennt wird, dass sich simultan eine Schäftung in Dickenrichtung ergibt. Die Besäumvorrichtung ist so gestaltet, dass das Material unter einem beliebigen Winkel zur Längsachse des Materials durchtrennt werden kann und auch der Winkel der Schäftung frei gewählt werden kann.

Zur Herstellung gurtkonturnaher Endkonturen der Lagen von pultrudierten Stäben ist oder sind die Sägevorrichtung und/oder die Fräsvorrichtung vorzugsweise zur Erzeugung einer Schäftung in Dickenrichtung und/oder zur Durchtrennung unter einem Winkel zur Längsachse der Lage der pultrudierten Stäbe ausgebildet, insbesondere mit einem Schäftungswinkel zwischen 2° und 10° zur Oberfläche der Lage und/oder mit einem Winkel von 90° bis ±45° zur Längsachse der Lage. Mit der Besäumvorrichtung kann das Material derart durchtrennt werden, dass sich simultan eine Schäftung in Dickenrichtung ergibt. Die Besäumvorrichtung ist so gestaltet, dass das Material unter einem fast beliebigen Winkel zur Längsachse des Materials durchtrennt werden kann und auch der Winkel der Schäftung frei gewählt werden kann. Ein Winkel von 90° zur Längsachse der Lage bedeutet, dass die Schnittkante genau quer zur Längsachse verläuft, während allerdings auch ein anderer Winkel zur Längsachse eingestellt sein kann.

Die Besäumvorrichtung weist vorzugsweise eine staubdichte Kapselung auf und insbesondere einen Anschluss für eine Staubabsaugvorrichtung. Besonders vorteilhaft ist diese Ausführung der Besäumeinheit, da der Staub nicht in den Bereich der Laminierform eindringen kann und so das bereits abgelegte Halbzeug kontaminiert, was zu einer Verschlechterung der zu erzielenden Festigkeiten im fertig laminierten Bauteil führen würde.

Die Haltevorrichtung, die Führungsvorrichtung und/oder die Besäumvorrichtung ist oder sind vorzugsweise stationär oder auf einer im Wesentlichen parallel zur Oberfläche der Laminierform beweglichen Tragevorrichtung montiert. Die stationäre Anordnung hat den Vorteil der stabilen und reproduzierbaren Lagerung. Eine Lagerung auf einer beweglichen Tragevorrichtung hat den Vorteil, dass die zuletzt abgerollte Lage von pultrudierten Stäben nicht über die zuvor bereits abgelegten Lagen geschoben werden muss, sondern auf dieser aufgelegt und abgerollt wird. Es kommt dabei nicht mehr zu einer Reibung der Oberflächen aneinander mit der Gefahr, die bislang bereits abgelegte Struktur von Lagen von pultrudierten Stäben des Rotorblattgurtes zu stören.

Eine besonders stabile Schichtung der Lagen von pultrudierten Stäben wird erreicht, wenn die Stäbe der einzelnen Lagen nicht direkt aufeinander, sondern etwas versetzt zueinander angeordnet sind. Dann bilden die Fügestellen, wie bei einer Steinmauer, nicht durchgehende Linien, die potenzielle strukturelle Schwachstellen bilden, sondern eine mäandernde Form, die eine sichere Fügung erlaubt. Vorzugsweise wird daher in jeder Lage zumindest ein seitenständiger Stab mit verringerter Breite ausgeführt, so dass trotz der Versetzungen die Breite des Rotorblattgurtes über die gesamte Dicke konstant ist.

Bei dem System ist hierzu vorzugsweise vorgesehen, dass zur Ablage alternierender Abfolgen von Lagen mit versetzt angeordneten Stäben in den einzelnen Lagen zwei Haltevorrichtungen für zwei Stablagenrollen vorgesehen sind, wobei die Haltevorrichtungen beide an einem Ende der Laminierform oder an gegenüberliegenden Enden der Laminierform oder auf der beweglichen Tragevorrichtung angeordnet sind. Dabei sind vorzugsweise zur Herstellung des Rotorblattgurtes zwei Stablagenrollen mit jeweils einem randständigen Stab von geringerer Breite als die übrigen Stäbe der Lage so in den Haltevorrichtungen angeordnet, dass die randständigen Stäbe geringerer Breite an unterschiedlichen Seiten in Bezug auf die Laminierform angeordnet sind.

Durch die alternierende Abfolge der Lagen ist der jeweilige Stab mit geringerer Breite abwechselnd an der linken Kante oder der rechten Kante angeordnet, so dass sich der gewünschte Versatz ergibt. Dazu kann es entweder notwendig sein, die Lage auf den Stablagenrollen jeweils entsprechend anzuordnen, oder, bei gleichartig angeordneten Lagen, auf den Stablagenrollen jeweils eine Stablagenrolle auf der jeweiligen Haltevorrichtung umzudrehen.

Die Haltevorrichtungen für die beiden Stablagenrollen können auch an entgegengesetzten Enden des Rotorblattgurtes bzw. der Laminierform angeordnet sein. Da diese in einander entgegengesetzten Richtungen abgerollt werden, ergibt bereits aus dieser Verdrehung bzw. Umorientierung eine Anordnung der schmaleren Stäbe an den einander entgegengesetzten Seiten.

Die der Erfindung zugrunde liegende Aufgabe wird auch durch ein Verfahren zum Herstellen eines Rotorblattgurtes mit pultrudierten Stäben aus einem faserverstärkten Material, das dadurch weitergebildet wird, dass eine Abfolge von Lagen mit nebeneinander angeordneten pultrudierten Stäben aus einem faserverstärkten Material in einer Laminierform übereinander abgelegt wird, gelöst, insbesondere mittels eines zuvor beschriebenen erfindungsgemäßen Systems, wobei die Lagen alternierend von zwei Stablagenrollen abgerollt werden, die jeweils an einem Rand einen Stab geringerer Breite als die übrigen Stäbe der Lage aufweisen, wobei die randständigen Stäbe geringerer Breite an unterschiedlichen Seiten in Bezug auf die Laminierform angeordnet sind.

Hierzu werden vorzugsweise die Stablagenrollen gemeinsam auf einer beweglichen Tragevorrichtung über die Laminierform verfahren, wobei bei einer Bewegung in einer Richtung eine Lage von einer Stablagenrolle und bei einer Bewegung in Gegenrichtung eine Lage von der anderen Stablagenrolle abgerollt wird.

Alternativ werden vorzugsweise die Lagen von stationär montierten Haltevorrichtungen abgerollt, die an einem Ende oder an gegenüberliegenden Enden der Laminierform stationär angeordnet sind.

Um eine möglichst positionsgenaue Herstellung des Rotorblattgurtes zu gewährleisten, erfolgt das Ausrollen des Materials zwischen der Stablagenrolle und einer Führungsvorrichtung vorzugsweise kraftfrei. Das kraftfreie Ausrollen sorgt dafür, dass sich die Stäbe beim Ausrollen nicht in ihrer Struktur verändern, so dass sie die gewünschte Ausrichtung für den Rotorblattgurt beibehalten.

Die Justierung der Positionierung erfolgt in einer besonders vorteilhaften Ausführung automatisch, indem die Position der Oberfläche der obersten Lage in Bezug auf einen Referenzpunkt bestimmt wird und die Führungsvorrichtung durch eine Steuer- und/oder Regelvorrichtung entsprechend nachgeführt wird.

Eine weitere vorteilhafte Ausbildung des erfindungsgemäßen Verfahrens besteht darin, dass die Länge des ausgebrachten Materials in der Führungsvorrichtung, insbesondere über die Rotation der Rollen oder berührungslos durch optische Sensoren oder durch ein zusätzliches Laufrad, gemessen wird und mit einem in einer Steuervorrichtung gespeicherten Laminatplan abgeglichen wird, der die Länge einer jeden auszubringenden Lage des Materials festlegt. Durch diese Eigenschaft muss die Länge jeder Lage nicht aufwändig vermessen werden, sondern das Material kann schnell bis zur vorgesehenen Länge ausgebracht und dann abgelängt werden.

Die zu dem erfindungsgemäßen System und dem erfindungsgemäßen Verfahren genannten Merkmale, Eigenschaften und Vorteile gelten auch für den jeweils anderen Erfindungsgegenstand, da sie sich aufeinander beziehen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Seitendarstellung eines erfindungsgemäßen Systems,
- Fig. 2: eine schematische Darstellung der Lagenanordnung eines Rotorblattgurtes,
- Fig. 3a), b), c): drei verschiedene Alternativen in schematischer Darstellung für die Aufbringung von Lagen von pultrudierten Stäben auf eine Laminierform.

In den Zeichnungen sind jeweils gleiche oder gleichartige Elemente und/oder Teile mit denselben Bezugsziffern versehen, so dass von einer erneuten Vorstellung jeweils abgesehen wird.

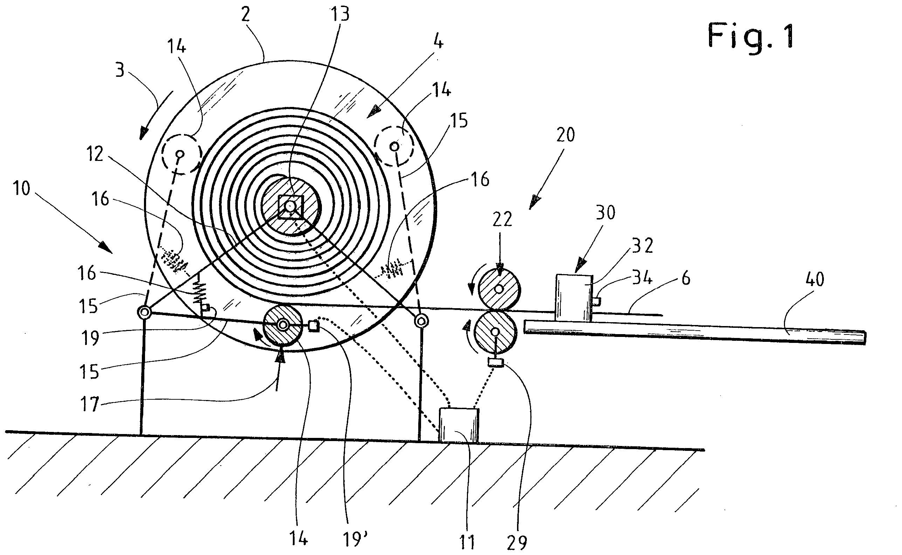

In Fig. 1 ist ein System zur Herstellung eines Rotorblattgurtes 1 aus Lagen 6 von pultrudierten Stäben schematisch dargestellt. Die Lagen 6 von pultrudierten Stäben werden auf Stablagenrollen 2 zur Verfügung gestellt, auf denen die Stablagen 4 aufgerollt sind, die dann später abgerollt zu Stablagen 6 werden. Die Stablagenrolle 2 ruht drehbar auf einer Haltevorrichtung 10, die ein Gestell 12 zur Halterung der Stablagenrolle 2 aufweist. An dem Gestell 12 ist auch eine Antriebs- und Bremsvorrichtung 13 angeordnet, mittels der die Stablagenrolle 2 beispielsweise in Abrollrichtung 3 gedreht werden kann. Die Haltevorrichtung 10 weist wenigstens eine Andruckrolle 14 mit einer weichen Oberfläche auf, die auf einem angelenkten Andruckarm 15 angeordnet ist, der mittels einer Feder 16 kraftbeaufschlagt ist. Die Andruckrolle 14 drückt damit in Richtung 17 der Federkraft gegen die aufgerollte Stablage 4 und hindert sie somit daran, sich unter ihrer eigenen Spiralfederkraft zu entrollen. Dabei ist die Andruckrolle 14 dort angeordnet, wo die aufgerollte Stablage 4 abgerollt wird. Zur Stabilisierung der aufgerollten Stablage 4 auf der Stablagenrolle 2 können auch noch weitere Andruckrollen 14, die ebenfalls federkraftbeaufschlagt sein können, um den Umfang der Stablage 4 angeordnet sein.

Die Stablage 4 wird abgerollt und durch eine Führungsvorrichtung 20 mit zwei Führungsrollen 22 geführt. Diese nimmt die Stablage 4 auf und leitet sie zu einer Besäumvorrichtung 30 weiter, die Fräs- und/oder Sägevorrichtungen aufweisen kann, um die Endkante einer Stablage 6 zu definieren. Die Stablage 6 wird weiter abgerollt und in gewünschter Position auf eine Laminierform 40 gebracht bzw. in diese eingelegt.

Es ist eine Steuervorrichtung 11, die Signale über gestrichelt dargestellte Signalkanäle, die kabelgebunden oder kabellos sein können, von Sensoren 19, 19', 29 empfangen kann, die die Steuervorrichtung 11 über den Fortschritt des Abrollens informieren. Solche Sensoren 19, 19', 29 können beispielsweise Sensoren 19 sein, die an einer Kraftbeaufschlagungsvorrichtung, beispielsweise einer Feder, angeordnet sind, mit denen eine Andruckrolle 14 beaufschlagt wird. Ein Sensor 19' kann auch direkt an einer Andruckrolle 14 angeordnet sein. Ein alternativer oder zusätzlicher Sensor 29 kann auch den Fortschritt des Abrollens an einer Führungsrolle 22 beobachten. Ein solcher Sensor 29 kann ein berührungsloser Sensor sein oder beispielsweise auch ein Drehrad bzw. Laufrad.

Die Steuervorrichtung 11 weist außerdem einen Steuerkanal, drahtlos oder kabelgebunden, zu der Antriebs- und Bremsvorrichtung 13 der Haltevorrichtung 10 auf. Ebenfalls kann ein angetriebenes Führungsrad 22 in gleicher Weise gesteuert werden, so dass automatisch eine vorprogrammierte Kontur des aufzubauenden Rotorblattgurtes eingestellt werden kann. Ebenfalls kann die Höhe der Führungsrollen 22 bzw. der Führungsvorrichtung 20 eingestellt werden, um während des Aufbaus des Rotorblattgurtes aus aufeinander folgenden Lagen 6 von pultrudierten Stäben die erreichte Höhe sukzessive anzupassen.

Die Besäumvorrichtung 30 ist mit einer staubdichten Kapselung 32 dargestellt, die zusätzlich noch einen Anschluss 34 zur Absaugung von entstehendem Staub aufweist. Auf diese Weise wird die Besäumung weitgehend staubfrei vorgenommen.

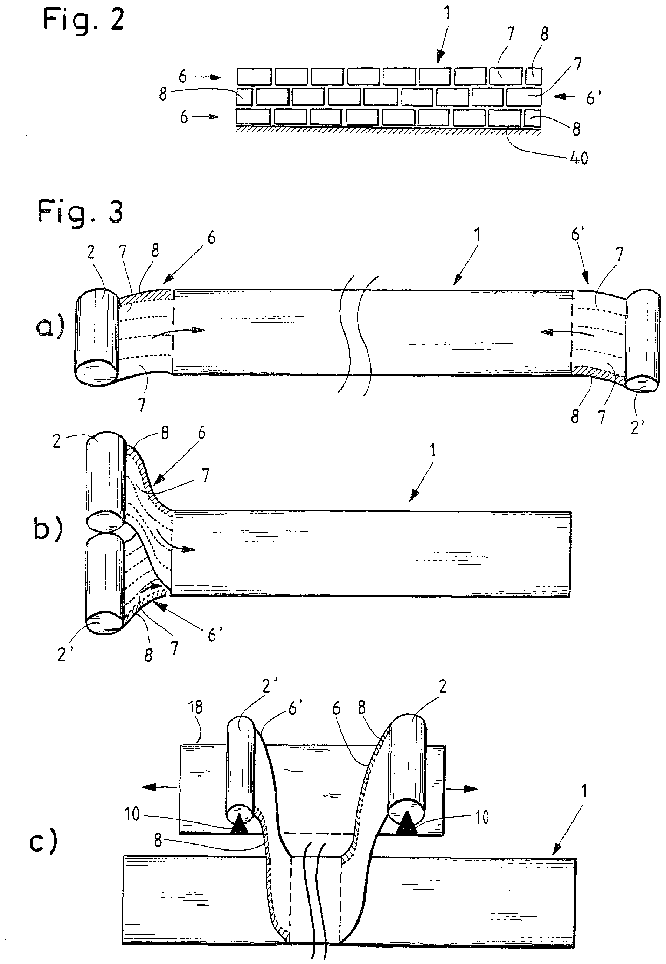

In Fig. 2 ist der Schichtaufbau eines erfindungsgemäß hergestellten Rotorblattgurtes schematisch dargestellt. Der Querschnitt zeigt die Laminierform 40 zuunterst, auf der drei Lagen 6, 6' von pultrudierten Stäben 7, 8 angeordnet sind. Jede Lage 6, 6' weist eine Vielzahl von normal breiten pultrudierten Stäben 7 und jeweils einen seitenständigen pultrudierten Stab 8 geringerer Breite, insbesondere halber Breite, auf. Letztere sind in den Lagen 6 in Fig. 2 auf der rechten Seite und in der Lage 6' auf der linken Seite angeordnet, so dass sich bei gleichbleibender Dicke der Lagen 6, 6' eine versetzte Anordnung der pultrudierten Stäbe 7, 8 ergibt, die eine fehlstellenarme Verfügung der pultrudierten Stäbe miteinander und somit eine besonders stabile Struktur erlaubt.

In den Fig. 3a), 3b) und 3c) sind drei Alternativen zur Herstellung der in Fig. 2 dargestellten Struktur eines Rotorblattgurtes 1 gezeigt. Gemäß Fig. 3a) werden vom blattwurzelseitigen Ende und vom blattspitzenseitigen Ende von zwei Stablagenrollen 2, 2' in entgegengesetzte Richtungen gemäß Pfeilrichtung Lagen 6, 6' abwechselnd abgelegt. Die Lagen 6 haben dabei die Stäbe 8 verminderter Breite auf einer Seite, die Stabrolle 2' auf der entgegengesetzten Seite, so dass sich die Struktur aus Fig. 2 ergibt.

In Fig. 3b) ist eine Alternative gegeben, wonach beide Stablagenrollen 2, 2' übereinander auf einer Seite, beispielsweise blattwurzelseitig, des Rotorblattgurtes 1 angeordnet sind. Da die Stablagenrolle 2' gegenüber der Stablagenrolle 2 einmal umgedreht worden ist, befinden sich die Stäbe verminderter Breite 8 in den beiden Fällen an gegenüberliegenden Seiten wiederum. Es wird abwechselnd von der oberen und von der unteren Stablagenrolle 2, 2' eine Lage 6, 6' entnommen und abgelegt, um den Rotorblattgurt 1 herzustellen.

In Fig. 3c) ist eine alternative Lösung dargestellt, bei der die Stablagenrollen 2, 2' nicht, wie in Fig. 3a) und 3b) gezeigt, stationär gelagert sind, sondern auf einer beweglichen Tragevorrichtung bzw. einem Wagen 18. Die beiden Pfeile links und rechts des Wagens 18 bzw. Schlittens zeigen, dass der Wagen 18 nacheinander jeweils in eine Richtung und in die Gegenrichtung von einem Gurtende zum anderen und wieder zurück verfahren wird, also von Blattspitze zur Wurzel und zurück. Bei einem Verfahren des Wagens 18 von links nach rechts in der Ansicht von Fig. 3c) wird eine Lage 6 von pultrudierten Stäben 7, 8 von der rechten Rolle 2 abgerollt, während in Gegenrichtung, also in der Bewegung nach links, eine Lage 6' von der Stablagenrolle 2' abgerollt wird. Da dies ebenfalls alternierend erfolgt, ergibt sich wiederum die in Fig. 2 gezeigte versetzte Struktur der pultrudierten Stäbe 7, 8.

Alternativ hierzu ist es auch möglich, nur eine Rolle 2' auf dem Wagen 18 zu montieren, aber um eine Hochachse senkrecht zur Oberfläche der Laminierform drehbar zu lagern. So kann die Rolle 2 so gedreht werden, dass sie abwechelnd die unterschiedlichen benötigten Orientierungen annimmt, je nachdem, in welche Richtung der Wagen 18 bewegt wird.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 1: Rotorblattgurt
- 2, 2': Stablagenrolle
- 3: Abrollrichtung
- 4: aufgerollte Stablage
- 6, 6': Stablage
- 7: normal breiter Stab
- 8: Stab verminderter Breite
- 10: Haltevorrichtung
- 11: Steuervorrichtung
- 12: Gestell
- 13: Antriebs- und Bremsvorrichtung
- 14: Andruckrolle
- 15: angelenkter Andruckarm
- 16: Feder
- 17: Richtung der Kraft
- 18: Wagen
- 19, 19': Sensor
- 20: Führungsvorrichtung
- 22: Führungsrollen
- 29: Sensor
- 30: Besäumvorrichtung
- 32: staubdichte Kapselung
- 34: Anschluss zur Absaugung
- 40: Laminierform

## Patentansprüche

1. System zum Herstellen eines Rotorblattgurtes (1) mit pultrudierten Stäben (7, 8) aus einem faserverstärkten Material, **dadurch gekennzeichnet, dass** das System
wenigstens eine Stablagenrolle (2, 2') mit einer aufgerollten Lage (4; 6, 6') aus nebeneinander angeordneten pultrudierten Stäben (7, 8),
wenigstens eine Haltevorrichtung (10) zur drehbaren Lagerung der wenigstens einen Stablagenrolle (2, 2'),
eine Laminierform (40) zur Aufnahme von Lagen (6, 6') von pultrudierten Stäben (7, 8), wenigstens eine Führungsvorrichtung (20) und
wenigstens eine Besäumvorrichtung (30)
aufweist, wobei die Führungsvorrichtung (20) ausgebildet ist, eine von der Stablagenrolle (2, 2') abgerollte gesamte Lage (6, 6') von nebeneinander angeordneten pultrudierten Stäben (7, 8) auf die Laminierform (40) zu führen, wobei die Besäumvorrichtung (30) zur Besäumung der Lagen (6, 6') von pultrudierten Stäben (7, 8) eine Sägevorrichtung und/oder eine Fräsvorrichtung aufweist.

2. System nach Anspruch 1, **dadurch gekennzeichnet, dass** die Haltevorrichtung (10) eine Antriebsvorrichtung (13) und/oder eine Bremsvorrichtung (13) für eine in der Haltevorrichtung (10) gehaltene Stablagenrolle (2, 2') und/oder wenigstens eine kraftbeaufschlagte Andruckrolle (14) aufweist, die auf die aufgerollte Stablage (4; 6, 6') drückt, wobei insbesondere die wenigstens eine Andruckrolle (14) eine weiche Oberfläche aufweist.

3. System nach Anspruch 2, **dadurch gekennzeichnet, dass** wenigstens ein Sensor (19, 19', 29) in der Führungsvorrichtung (20) und/oder an einer Andruckrolle (14) und/oder an einer eine Andruckrolle (14) mit Kraft beaufschlagenden Einrichtung (15, 16) angeordnet ist, wobei ein Signalübertragungskanal vom wenigstens einen Sensor (19, 19', 29) zu einer Steuer- oder Regelvorrichtung (11) der Antriebs- und/oder Bremsvorrichtung (13) vorhanden ist und die Steuer- oder Regelvorrichtung (11) ausgebildet ist, die Bewegung einer Stablagenrolle (2, 2') abhängig von übertragenen Sensorsignalen zu steuern oder zu regeln.

4. System nach einem der Ansprüche 1 bis 3, **dadurch gekennzeichnet, dass** eine Steuervorrichtung (11) für die Führungsvorrichtung (20) umfasst ist, die ausgebildet ist, die Position der Führungsvorrichtung (20) bezüglich ihrer vertikalen und/oder horizontalen Position in Bezug auf die Laminierform (40) nachzuführen, insbesondere in Abhängigkeit von der Position der Oberfläche der obersten Lage (6, 6') von pultrudierten Stäben (7, 8) in der Laminierform (40).

5. System nach einem der Ansprüche 1 bis 4, **dadurch gekennzeichnet, dass** die Führungsvorrichtung (20) Führungsrollen (22) aufweist, zwischen denen die Lage (6, 6') von pultrudierten Stäben (7, 8) hindurch läuft, wobei insbesondere wenigstens ein berührungsloser Sensor und/oder wenigstens ein Laufradsensor (29) zur Messung einer ausgebrachten Länge einer Lage (6, 6') von pultrudierten Stäben (7, 8) umfasst ist.

6. System nach Anspruch 5, **dadurch gekennzeichnet, dass** wenigstens eine Führungsrolle (22) einen Antrieb und/oder eine Bremse aufweist.

7. System nach einem der Ansprüche 1 bis 6, **dadurch gekennzeichnet, dass** die Sägevorrichtung und/oder die Fräsvorrichtung zur Erzeugung einer Schäftung in Dickenrichtung und/oder zur Durchtrennung unter einem Winkel zur Längsachse der Lage (6, 6') der pultrudierten Stäbe (7, 8) ausgebildet ist oder sind, insbesondere mit einem Schäftungswinkel zwischen 2° und 10° zur Oberfläche der Lage und/oder mit einem Winkel von 90° bis ±45° zur Längsachse der Lage (6, 6').

8. System nach einem der Ansprüche 1 bis 7, **dadurch gekennzeichnet, dass** die Besäumvorrichtung (30) eine staubdichte Kapselung (32) aufweist und insbesondere einen Anschluss (34) für eine Staubabsaugvorrichtung.

9. System nach einem der Ansprüche 1 bis 8, **dadurch gekennzeichnet, dass** die Haltevorrichtung (10), die Führungsvorrichtung (20) und/oder die Besäumvorrichtung (30) stationär oder auf einer im Wesentlichen parallel zur Oberfläche der Laminierform (40) beweglichen Tragevorrichtung (18) montiert ist oder sind.

10. System nach einem der Ansprüche 1 bis 9, **dadurch gekennzeichnet, dass** zur Ablage alternierender Abfolgen von Lagen (6, 6') mit versetzt angeordneten Stäben (7, 8) in den einzelnen Lagen (6, 6') zwei Haltevorrichtungen (10) für zwei Stablagenrollen (2, 2') vorgesehen sind, wobei die Haltevorrichtungen (10) beide an einem Ende der Laminierform (40) oder an gegenüberliegenden Enden der Laminierform (40) oder auf der beweglichen Tragevorrichtung (18) angeordnet sind.

11. System nach Anspruch 10, **dadurch gekennzeichnet, dass** zur Herstellung des Rotorblattgurts (1) zwei Stablagenrollen (2, 2') mit jeweils einem randständigen Stab (8) von geringerer Breite als die übrigen Stäbe (7) der Lage (6, 6') so in den Haltevorrichtungen (10) angeordnet sind, dass die randständigen Stäbe (8) geringerer Breite an unterschiedlichen Seiten in Bezug auf die Laminierform (40) angeordnet sind.

12. Verfahren zum Herstellen eines Rotorblattgurtes (1) mit pultrudierten Stäben (7, 8) aus einem faserverstärkten Material, **dadurch gekennzeichnet, dass** eine Abfolge von Lagen (6, 6') mit nebeneinander angeordneten pultrudierten Stäben (7, 8) aus einem faserverstärkten Material in einer Laminierform (40) übereinander abgelegt wird, mittels eines Systems nach einem der Ansprüche 1 bis 11, wobei die Lagen (6, 6') alternierend von zwei Stablagenrollen (2, 2') abgerollt werden, die jeweils an einem Rand einen Stab (8) geringerer Breite als die übrigen Stäbe (7) der Lage (6, 6') aufweisen, wobei die randständigen Stäbe (8) geringerer Breite an unterschiedlichen Seiten in Bezug auf die Laminierform (40) angeordnet sind.

13. Verfahren nach Anspruch 12, **dadurch gekennzeichnet, dass** die Stablagenrollen (2, 2') gemeinsam auf einer beweglichen Tragevorrichtung (18) über die Laminierform (40) verfahren werden, wobei bei einer Bewegung in einer Richtung eine Lage (6) von einer Stablagenrolle (2) und bei einer Bewegung in Gegenrichtung eine Lage (6') von der anderen Stablagenrolle (6') abgerollt wird.

14. Verfahren nach Anspruch 12, **dadurch gekennzeichnet, dass** die Lagen (6, 6') von stationär montierten Haltevorrichtungen (10) abgerollt werden, die an einem Ende oder an gegenüberliegenden Enden der Laminierform (40) stationär angeordnet sind.

15. Verfahren nach einem der Ansprüche 12 bis 14, **dadurch gekennzeichnet, dass** das Ausrollen des Materials zwischen der Stablagenrolle (2, 2') und einer Führungsvorrichtung (20) kraftfrei erfolgt.

## Claims

1. A system for producing a rotor blade spar cap (1) with pultruded rods (7, 8) made of a fibre-reinforced material, **characterised in that** the system comprises:
at least one rod layer roll (2, 2') comprising a rolled-up layer (4; 6, 6') of pultruded rods (7, 8) which are arranged next to one another,
at least one holding device (10) for rotatably supporting the at least one rod layer roll (2, 2'),
a laminating mould (40) for receiving layers (6, 6') of pultruded rods (7, 8),
at least one guiding device (20) and
at least one trimming device (30),
wherein the guiding device (20) is constructed so as to guide an entire layer (6, 6') of pultruded rods (7, 8) which are arranged next to one another, and which are unrolled from the rod layer roll (2, 2'), onto the laminating mould (40), wherein the trimming device (30) comprises a sawing device and / or a milling device for trimming the layers (6, 6') of pultruded rods (7, 8).

2. The system in accordance with claim 1, **characterised in that** the holding device (10) comprises a drive device (13) and / or a braking device (13) for a rod layer roll (2, 2') which is held in the holding device (10), and / or at least one pinch roller (14) which is subjected to a force and which presses on the rolled-up rod layer (4; 6, 6'), wherein in particular the at least one pinch roller (14) has a soft surface.

3. The system in accordance with claim 2, **characterised in that** at least one sensor (19, 19', 29) is arranged in the guiding device (20) and / or on a pinch roller (14) and / or on a device (15, 16) which applies a force to a pinch roller (14), wherein a signal transmission channel from the at least one sensor (19, 19', 29) to a control device or a feedback control device (11) of the drive device and / or the braking device (13) is provided, and wherein the control device or the feedback control device (11) is constructed so as to control, or to control with feedback, the movement of a rod layer roll (2, 2') as a function of transmitted sensor signals.

4. The system in accordance with any one of the claims 1 to 3, **characterised in that** a control device (11) for the guiding device (20) is comprised, which control device (11) is constructed so as to cause tracking of the position of the guiding device (20) with respect to its vertical and / or horizontal position in relation to the laminating mould (40), in particular as a function of the position of the surface of the uppermost layer (6, 6') of pultruded rods (7, 8) in the laminating mould (40).

5. The system in accordance with any one of the claims 1 to 4, **characterised in that** the guiding device (20) comprises guide rollers (22) between which the layer (6, 6') of pultruded rods (7, 8) passes, wherein in particular at least one non-contact sensor and / or at least one running wheel sensor (29) for measuring a dispensed length of a layer (6, 6') of pultruded rods (7, 8) is comprised.

6. The system in accordance with claim 5, **characterised in that** at least one guide roller (22) comprises a drive and / or a brake.

7. The system in accordance with any one of the claims 1 to 6, **characterised in that** the sawing device and / or the milling device is or are constructed so as to create a scarf in the thickness direction and / or to cut through at an angle with respect to the longitudinal axis of the layer (6, 6') of the pultruded rods (7, 8), in particular at a scarf angle between 2° and 10° with respect to the surface of the layer and / or at an angle of 90° to ±45° with respect to the longitudinal axis of the layer (6, 6').

8. The system in accordance with any one of the claims 1 to 7, **characterised in that** the trimming device (30) comprises a dust-tight enclosure (32) and in particular a connection (34) for a dust extraction device.

9. The system in accordance with any one of the claims 1 to 8, **characterised in that** the holding device (10), the guiding device (20) and / or the trimming device (30) is or are mounted in a stationary manner or on a supporting device (18) which is movable substantially parallel to the surface of the laminating mould (40).

10. The system in accordance with any one of the claims 1 to 9, **characterised in that**, for depositing alternating successions of layers (6, 6') with rods (7, 8) which are arranged in a staggered manner in the individual layers (6, 6'), two holding devices (10) for two rod layer rolls (2, 2') are provided, wherein the holding devices (10) are both arranged at one end of the laminating mould (40) or at opposite ends of the laminating mould (40) or on the movable supporting device (18).

11. The system in accordance with claim 10, **characterised in that**, for producing the rotor blade spar cap (1), two rod layer rolls (2, 2'), each of which comprising a rod (8) which is located towards the edge and which is of smaller width than the remaining rods (7) of the layer (6, 6'), are arranged in the holding devices (10) in such a way that the rods (8) which are located towards the edge and which are of smaller width are arranged on different sides with respect to the laminating mould (40).

12. A method of manufacturing a rotor blade spar cap (1) with pultruded rods (7, 8) of a fibre-reinforced material, **characterised in that** a succession of layers (6, 6') of pultruded rods (7, 8) of a fibre-reinforced material which are arranged next to one another is deposited one on top of the other in a laminating mould (40), by means of a system in accordance with any one of the claims 1 to 11, wherein the layers (6, 6') are alternately unrolled from two rod layer rolls (2, 2'), each of which comprises, at one edge, a rod (8) of smaller width than the remaining rods (7) of the layer (6, 6'), wherein the rods (8) which are located towards the edge and which are of smaller width are arranged on different sides with respect to the laminating mould (40).

13. The method in accordance with claim 12, **characterised in that** the rod layer rolls (2, 2') are moved together on a movable supporting device (18) over the laminating mould (40), wherein a layer (6) is unrolled from one rod layer roll (2) during the course of a movement in one direction, and a layer (6') is unrolled from the other rod layer roll (6') during the course of a movement in the opposite direction.

14. The method in accordance with claim 12, **characterised in that** the layers (6, 6') are unrolled from holding devices (10) which are mounted in a stationary manner, and which are arranged at one end or at opposite ends of the laminating mould (40) in a stationary manner.

15. The method in accordance with any one of the claims 12 to 14, **characterised in that** the unrolling of the material between the rod layer roll (2, 2') and a guiding device (20) takes place without the application of force.

## Revendications

1. Système de fabrication d'une semelle de longeron de pale de rotor (1) avec des barres pultrudées (7, 8) en un matériau renforcé par des fibres, **caractérisé en ce que** le système présente
au moins un rouleau de couches de barres (2, 2') avec une couche (4 ; 6, 6') enroulée de barres pultrudées (7, 8) agencées l'une à côté de l'autre,
au moins un dispositif de retenue (10) pour le montage rotatif de l'au moins un rouleau de couches de barres (2, 2'),
un moule de stratification (40) pour la réception de couches (6, 6') de barres pultrudées (7, 8),
au moins un dispositif de guidage (20) et
au moins un dispositif de rognage (30),
dans lequel le dispositif de guidage (20) est réalisé pour guider une couche (6, 6') totale déroulée du rouleau de couches de barres (2, 2') de barres pultrudées (7, 8) agencées l'une à côté de l'autre sur le moule de stratification (40), dans lequel le dispositif de rognage (30) présente pour le rognage des couches (6, 6') de barres pultrudées (7, 8) un dispositif de sciage et/ou un dispositif de fraisage.

2. Système selon la revendication 1, **caractérisé en ce que** le dispositif de retenue (10) présente un dispositif d'entraînement (13) et/ou un dispositif de freinage (13) pour un rouleau de couches de barres (2, 2') retenu dans le dispositif de retenue (10) et/ou au moins un rouleau presseur (14) sollicité par force, qui presse sur la couche de barres (4 ; 6, 6') enroulée, dans lequel en particulier l'au moins un rouleau presseur (14) présente une surface tendre.

3. Système selon la revendication 2, **caractérisé en ce qu'**au moins un capteur (19, 19', 29) est agencé dans le dispositif de guidage (20) et/ou au niveau d'un rouleau presseur (14) et/ou au niveau d'un équipement (15, 16) sollicitant par force un rouleau presseur (14), dans lequel un canal de transmission de signaux de l'au moins un capteur (19, 19', 29) à un dispositif de commande ou de régulation (11) du dispositif d'entraînement et/ou de freinage (13) est présent et le dispositif de commande ou de régulation (11) est réalisé pour commander ou pour réguler le déplacement d'un rouleau de couches de barres (2, 2') en fonction de signaux de capteur transmis.

4. Système selon l'une quelconque des revendications 1 à 3, **caractérisé en ce qu'**un dispositif de commande (11) pour le dispositif de guidage (20) est compris, qui est réalisé pour réajuster la position du dispositif de guidage (20) en ce qui concerne sa position verticale et/ou horizontale par rapport au moule de stratification (40), en particulier en fonction de la position de la surface de la couche (6, 6') supérieure de barres pultrudées (7, 8) dans le moule de stratification (40).

5. Système selon l'une quelconque des revendications 1 à 4, **caractérisé en ce que** le dispositif de guidage (20) présente des rouleaux de guidage (22), entre lesquels passe la couche (6, 6') de barres pultrudées (7, 8), dans lequel en particulier au moins un capteur sans contact et/ou au moins un capteur de roue mobile (29) est compris pour la mesure d'une longueur déployée d'une couche (6, 6') de barres pultrudées (7, 8).

6. Système selon la revendication 5, **caractérisé en ce qu'**au moins un rouleau de guidage (22) présente un entraînement et/ou un frein.

7. Système selon l'une quelconque des revendications 1 à 6, **caractérisé en ce que** le dispositif de sciage et/ou le dispositif de fraisage est ou sont réalisé(s) pour la génération d'une jointure en bout dans le sens de l'épaisseur et/ou pour le sectionnement selon un angle par rapport à l'axe longitudinal de la couche (6, 6') des barres pultrudées (7, 8), en particulier avec un angle de jointure en bout entre 2° et 10° par rapport à la surface de la couche et/ou avec un angle de 90° à ±45° par rapport à l'axe longitudinal de la couche (6, 6').

8. Système selon l'une quelconque des revendications 1 à 7, **caractérisé en ce que** le dispositif de rognage (30) présente une capsule étanche à la poussière (32) et en particulier un raccord (34) pour un dispositif d'aspiration de poussière.

9. Système selon l'une quelconque des revendications 1 à 8, **caractérisé en ce que** le dispositif de retenue (10), le dispositif de guidage (20) et/ou le dispositif de rognage (30) est ou sont monté(s) de manière stationnaire ou sur un dispositif porteur mobile (18) sensiblement parallèle à la surface du moule de stratification (40).

10. Système selon l'une quelconque des revendications 1 à 9, **caractérisé en ce que** pour le dépôt de séquences alternées de couches (6, 6') avec des barres (7, 8) agencées de manière décalée dans les différentes couches (6, 6'), deux dispositifs de retenue (10) sont prévus pour deux rouleaux de couches de barres (2, 2'), dans lequel les dispositifs de retenue (10) sont agencés tous deux à une extrémité du moule de stratification (40) ou à des extrémités opposées du moule de stratification (40) ou sur le dispositif porteur mobile (18).

11. Système selon la revendication 10, **caractérisé en ce que** pour la fabrication de la semelle de longeron de pale de rotor (1), deux rouleaux de couches de barres (2, 2') avec respectivement une barre côté bord (8) de largeur inférieure à celle des autres barres (7) de la couche (6, 6') sont agencés dans les dispositifs de retenue (10) de sorte que les barres côté bord (8) de largeur inférieure sont agencées sur différents côtés par rapport au moule de stratification (40).

12. Procédé de fabrication d'une semelle de longeron de pale de rotor (1) avec des barres pultrudées (7, 8) en un matériau renforcé par des fibres, **caractérisé en ce qu'**une séquence de couches (6, 6') avec des barres pultrudées (7, 8) agencées l'une à côté de l'autre en un matériau renforcé par des fibres est déposée l'une au-dessus de l'autre dans un moule de stratification (40), au moyen d'un système selon l'une quelconque des revendications 1 à 11, dans lequel les couches (6, 6') sont déroulées en alternance de deux rouleaux de couches de barres (2, 2'), qui présentent respectivement au niveau d'un bord une barre (8) de largeur inférieure à celle des autres barres (7) de la couche (6, 6'), dans lequel les barres côté bord (8) de largeur inférieure sont agencées sur différents côtés par rapport au moule de stratification (40).

13. Procédé selon la revendication 12, **caractérisé en ce que** les rouleaux de couches de barres (2, 2') sont déplacés conjointement sur un dispositif porteur mobile (18) au-dessus du moule de stratification (40), dans lequel lors d'un déplacement dans une direction une couche (6) est déroulée d'un rouleau de couches de barres (2) et lors d'un déplacement dans la direction opposée une couche (6') est déroulée de l'autre rouleau de couches de barres (6').

14. Procédé selon la revendication 12, **caractérisé en ce que** les couches (6, 6') sont déroulées des dispositifs de retenue (10) montés de manière stationnaire, qui sont agencés de manière stationnaire à une extrémité ou à des extrémités opposées du moule de stratification (40).

15. Procédé selon l'une quelconque des revendications 12 à 14, **caractérisé en ce que** le déroulement du matériau entre le rouleau de couches de barres (2, 2') et un dispositif de guidage (20) se fait sans force.
